(19) Europäisches Patentamt
European Patent Office
Office européen des brevets

(11) Publication number: **0 196 666**
**B1**

(12) # EUROPEAN PATENT SPECIFICATION

(45) Date of publication of patent specification: **28.12.88**

(51) Int. Cl.$^4$: **C 03 C 3/32,** C 01 F 7/50, C 01 F 7/58, C 01 G 1/06, C 01 B 9/02, C 01 B 9/08

(21) Application number: **86104497.2**

(22) Date of filing: **02.04.86**

(54) **Process for manufacturing halides to be used for producing halide glasses.**

(30) Priority: **03.04.85 IT 6732585**

(43) Date of publication of application:
**08.10.86 Bulletin 86/41**

(45) Publication of the grant of the patent:
**28.12.88 Bulletin 88/52**

(84) Designated Contracting States:
**DE FR GB NL**

(56) References cited:
**CHEMICAL ABSTRACTS, vol. 68, no. 17, 22nd April 1968, page 7563, no. 78338q, Columbus, Ohio, US; H. REINHECKEL et al.: "Reactions with alkylaluminum. XI. Reactions of triethylaluminum, ethylaluminum sesquichloride, and diethyl-aluminum hydride with chloromethanes", & J. PRAKT. CHEM. 37(3-4), 214-24, 1968**

**CHEMICAL ABSTRACTS, vol. 96, no. 9, 1st March 1982, page 622, no. 69076d, Columbus, Ohio, US; W.H. THOMAS: "Compatibility of aluminum alkyls and chlorinated hydrocarbons", & IND. ENG. CHEM. PROD. RES. DEV. 1982, 21(1), 120-2**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Modone, Eros**
**Via Cibrario, 45**
**Torino (IT)**
Inventor: **Roba, Giacomo**
**Via dei pini domestici, 5**
**Cogoleto (Genova) (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 196 666 B1

## Description

The present invention relates to the industrial processes of manufacturing optical transmission means for telecommunications systems using light radiations and more particularly it concerns a process of manufacturing halides to be used for producing halide glasses.

Various materials exist for which a minimal intrinsic attenuation of the order of $10^{-2}$ to $10^{-4}$ dB/km can be predicted in the spectral region comprised between 2 and 12 µm. They are therefore considered to be suited to the fabrication of extremely low loss optical fibres to be used for transmission systems with widely-spaced repeaters, operating in the medium infrared. Yet, materials used to manufacture optical fibres must have various characteristics not only of the optical type; namely high mechanical resistance, chemical and structural stability, low reactivity with the environment.

Among the various materials those, whose characteristics more strictly satisfy these requirements, are halide glasses and more particularly fluoride and chloride glasses having a metal fluorides and chlorides as basic compounds.

Even though glass structures derived from elements of the II Group (Be, Zn, Ba) or of the III Group (Al, Sc, La, Th) may be used, matrices derived from the elements of the IV Group (Hf, Zr) have proved particularly suited for the optical transmission in the medium infrared, ranging from 2 to 8 µm. Fluorohafnate and fluorozirconate glasses, discovered in France in 1976, are in common use and have all the characteristics necessary for a material to be used in the optical telecommunications field.

Chloride-based glasses have also been lately manufactured and their basic properties are now being investigated. See e.g. the paper entitled "Cadmium halide glasses", by M. Mateki et al. issued on the Journal of Non-Crystalline Solids, 56 (1983), pages 81—86. These glasses are also very promising since they present a minimum attenuation value at wavelengths higher than those of fluoride glasses. Namely chloride glasses present the attenuation minimum in the 6 µm region while the other in the neighbourhood of 3 µm. Hence they present wider optical pass-band and consequently a lower attenuation value.

Optimal performances can be obtained by the use of glasses produced by glass manufacturing processes ensuring ultra-high purity levels and perfect optical guide structure.

These requirements can only be met by processes very similar to the well known chemical vapour phase deposition (CVD) or anyway by processes exploiting the synthesis of liquid or vapour phase reactents. In these aggregation states, in fact, a reactant can attain a very high purification degree and the reaction can take place at temperatures much lower than those required of solid reactants, thanks to the close contact between the parts, secured by the fluid state.

A low temperature reaction is to be preferred, not only for economical reasons, but also because it permits a separation between the reactive phase and the phase in which the optical-fibre guide structure is built up.

In fact, if the reaction certainly occurs below a certain maximum temperature, the temperature of the first treatment of the solid particles produced can be selected at will.

One can thus operate under the best matrix vitrificability conditions. Besides, at low temperature the space arrangement of the produced material can be maintained, thus avoiding the rise of perturbations in the guide structure.

Such a space arrangement is still maintained thanks to the low-reaction temperature, as gaseous products are evacuated without giving rise to turbulence in the reaction mass.

The optical fibres produced with multi-component fluoride or chloride-based glasses can reach minimum attenuation values of the order of $10^{-3}$ dB/km and hence they can be used in ultra-long distance connections, e.g. they can be installed in transatlantic cables with very few if any intermediate repeaters.

Of course, it would be advisable to dispose of very-long fibre trunks, in order to reduce as much as possible the splice number. In fact fibre splices introduce minimum attenuation values of about 0.1 dB, that is why each splice produces the same attenuation of about 100 km of optical fibre made of the glasses described.

Hence processes of continuous fibre production are required, i.e. processes wherein glass production, preform manufacture and drawing can be effected without interruption.

Processes of this kind are already known, even though the used comopunds are generally solid or the production of glass in powder state is effected off line. It has also been tried (Chemical Abstracts, Vol. 68 No. 17, 22—4—68, page 7563, No. 78338q; Vol. 96, No. 9, 1—3—82, page 622, no 69076d) to react organometallic compounds such as $(C_2H_5)_3Al$, $(CH_3)_3Al$, $(CH_3)_2AlCl$, $(C_2H_5)_3Al$ or $(C_2H_5)_2AlCl$ with halide-derived compounds such as $CH_2Cl_2$, $CHCl_3$ or $ClCH_2CH_2Cl$. However, such reactions cause considerable reaction difficulties, such as extensive decomposition of the reactants and explosive reactions.

These disadvantages are overcome and the above-described technical problem is solved by the process provided by the present invention as defined in claim 1, which invention allows the production of multi-component halide glasses while operating at low temperature during the reaction step, and hence it allows the fabrication of ultra-low loss optical fibres in the medium infrared region.

In addition fibre trunks of whatever length can be obtained.

The present invention provides a process for manufacturing halides to be used for producing halide glasses, characterized in that the halides are obtained from the reaction in liquid states between organometallic compounds, which are liquid at ambient temperature and do not present oxygen in their

molecule, and interhalogen compounds, which are liquid at ambient temperature and do not present oxygen in their molecule, according to the following general scheme:

$$MR_n+SX+MX+SR_n$$

where
R is an organic group,
M is a metal,
S is a halogen,
X is a halogen,
MX is the glass-forming solid salt,
$SR_n$ is the sum of volatile reaction products.

The foregoing and other characteristics of the present invention will become clearer from the following description of a preferred embodiment thereof given by way of non-limiting example.

The process provided by the invention uses liquid reactants which duly combined yield a solid salt and some volatile products.

More particularly reactants consist of organometallic compounds, which are liquid at ambient temperature and do not present oxygen in their molecule.

As a secondary property one or more halogen groups may be present in the organometallic compound molecule.

The halogen suppliers are liquid at ambient temperature, do not present oxygen in their molecule and are of inter-halogen kind. Some reactants with their melting temperatures $T_f$ and boiling temperatures $T_e$ are listed below. Organometallic and inter-halide compounds are orderly listed as follows.

Organometallic compounds:

| | $T_f$(°C) | $T_e$(°C) |
|---|---|---|
| $(CH_3)_3$ Al | | 130 |
| $(C_2H_5)_3$ Al | −18 | 194 |
| $(CH_3)_2$ Al Cl | −50 | 84 |
| $(C_2H_5)_2$ Al Cl | −50 | 126 |
| $(CH_3)_4$ Pb | −27.5 | 110 |
| $(C_2H_5)_4$ Pb | −136.8 | 200 |
| $(C_2H_5)$ Sn | −12 | 150 |

Interhalogen compounds:

| | $T_f$(°C) | $T_e$(°C) |
|---|---|---|
| I $Cl_3$ | | 77 |
| I Cl | 27.2 | 97.4 |
| I $F_5$ | 9.6 | 98 |

The desired halides are obtained by mixing the reactants in the required concentrations, in particular as concerns metal sources. When the reactants do not get easily mixed, a suitable solvent, e.g. $CCl_4$ can be used.

The reaction speed can be controlled both thermally and by varying the concentrations of halogen sources.

Some possible reactions between the abovementioned compounds are listed below. Upward arrows indicate volatile products, downwards arrows indicate solid products.

$$2Al(CH_3)_3+2ICl_3 \rightarrow 2AlCl_3\uparrow +I_2\uparrow +3CH_3CH_3\uparrow$$

$$2Al(C_2H_5)_3+2ICl_3 \rightarrow 2AlCl_3\downarrow +I_2\uparrow +3CH_3CH_3\uparrow +3CH_2CH_2\uparrow$$

$$10Al(CH_3)_3+6IF_5 \rightarrow 10AlF_3\downarrow +3I_2\uparrow +15CH_3CH_3\uparrow$$

$$10Al(C_2H_5)_3+6IF_5 \rightarrow 10AlF_3\downarrow +3I_2\uparrow +15CH_3CH_3\uparrow +15CH_2CH_2\uparrow$$

The salt-producing reaction is the sum of two simple decomposition reactions.
The first concerns the organometallic compound decomposition, which is a strong reducing agent.
It can be partly decomposed by thermal action or by slightly-polar solvents.
A general scheme is the following:

$$MR_3 \rightarrow M^{3+} + 3R^-$$

The second reaction consists in a nucleophilic substitution reaction, producing the halogen ion. As a rule, we have

$$SX \rightarrow S^+ + X^- :\underset{\rightarrow}{R}\ SR + X^-$$

Such substitution occurs in presence of a nucleophilic agent :R which can derive from the solvent.
In effect thermal dissociation of organometallic compounds forms highly nucleophilic $R^-$ agents.
Whether the last reaction is of first order (SN1) with positive-charge formation or of second order (SN2) with formation of bipolar intermediate product, the speed of reaction depends on SX concentration on the common solvent polarity, on steric factor (free mean path, cross section, molecular geometric configuration).

The reaction temperature interval is determined by the liquid state of reactants, that is why it ranges between the highest melting temperature and the lowest boiling temperature of the compounds used. Anyway, the maximum temperature cannot exceed the glass forming value of the final matrix. In such a way the purification of salts obtained can be effected, in order to purify them from the reactants and the reaction products possibly incorporated, prior to glass formation.

## Claims

1. A process for manufacturing halides to be used for producing halide glasses, characterized in that the halides are obtained from the reaction in liquid states between organometallic compounds, which are liquid at ambient temperature and do not present oxygen in their molecule, and interhalogen compounds, which are liquid at ambient temperature and do not present oxygen in their molecule, according to the following general scheme:

$$MR_n + SX \rightarrow MX + SR_n$$

where
R is an organic group,
M is a metal
S is a halogen,
X is a halogen,
MX is the glass-forming solid salt,
$SR_n$ is the sum of volatile reaction products.

2. Process as in claim 1, characterized in that among possible organometallic compounds the following are used:

$$(CH_3)_3Al,\ (C_2H_5)_3Al,\ (CH_3)_2AlCl,\ (C_2H_5)Sn,\ (C_2H_5)_2AlCl\ (CH_3)_4Pb,\ (C_2H_5)_4Pb.$$

3. Process as in claim 1 or 2, characterized in that, upon use of organometallic compounds wherein one or more organic groups are present in the molecules, among possible interhalogen compounds the following ones are used:

$$IF_5,\ ICl_3,\ ICl.$$

4. Process as in any of claims 1 to 3, characterized in that the reaction speed is controlled by varying the concentration of said interhalide compounds.

## Patentansprüche

1. Verfahren zum Herstellen von Halogeniden zur Verwendung bei der Herstellung von Halogenidgläsern, dadurch gekennzeichnet, daß man die Halogenide aus der Reaktion in flüssigem Zustand zwischen organometallischen Verbindungen, die bei Raumtemperatur flüssig sind und keinen Sauerstoff in ihrem Molekül aufweisen, und Interhalogenoverbindungen, die bei Raumtemperatur flüssig sind und keinen Sauerstoff in ihrem Molekül aufweisen, gemäß der folgenden allgemeinen Formel erhält:

$$MR_n + SX \rightarrow MX + SR_n$$

wobei:

R=ein organischer Rest,
M=ein Metall,
S=ein Halogen,
X=ein Halogen,
MX=das glasbildende feste Salz,
$SR_n$=die Summe der flüchtigen Reaktionsprodukte.

2. Verfahren nach Anspruch 1, dadurch gekennzeichnet, daß man unter den möglichen organometallischen Verbindungen die folgenden verwendet:

$$(CH_3)_3Al,\ (C_2H_5)_3Al,\ (CH_3)_2AlCl,\ (C_2H_5)Sn,\ (C_2H_5)_2AlCl,\ (CH_3)_4Pb,\ (C_2H_5)_4Pb.$$

3. Verfahren nach Anspruch 1 oder 2, dadurch gekennzeichnet, daß man bei Verwendung organometallischer Verbindungen, die einen oder mehrere organische Reste in Molekül enthalten, von den molichen Interhalogenverbindungen die folgenden verwendet:

$$JF_5,\ JCl_3,\ JCl.$$

4. Verfahren nach einem der Ansprüche 1 bis 3, dadurch gekennzeichnet, daß man die Reaktionsgeschwindigkeit durch Verändern der Konzentration der Interhalogenidverbindungen steuert.

**Revendications**

1. Procédé pour la fabrication d'halogénures pour la production de verres à base d'halogénures, caractérisé en ce que les halogénures sont obtenus par réaction à l'état liquide de composés organométalliques, qui sont liquides à la température ambiante et dont la molécule ne contient pas d'oxygène, avec des composés interhalogènes qui sont liquides à la température ambiante et dont la molécule ne contient pas d'oxygène, selon le schéma général suivant:

$$MR_n+SX\rightarrow MX+SR_n$$

où

R indique un radical organique,
M indique un métal,
S indique un halogène,
X indique un halogène,
MX est le sel solide qui constitue le verre,
$SR_n$ est la somme des produits de réaction volatils.

2. Procédé suivant la revendication 1, caractérisé en ce que parmi les composés organométalliques possibles on emploie les suivants:

$$(CH_3)_3Al,\ (C_2H_5)_3Al,\ (CH_3)_2AlCl,\ (C_2H_5)Sn,\ (C_2H_5)_2AlCl,\ (CH_3)_2Pb,\ (C_2H_5)_4Pb.$$

3. Procédé suivant les revendications 1 ou 2, caractérisé en ce que dès l'emploi de composés organométalliques où un ou plusieurs groupement organiques sont présents dans la molécule, parmi les composés interhalogènes possibles, on emploie les suivants:

$$IF_5,\ ICl_3,\ ICl$$

4. Procédé selon une quelconque des revendications de 1 à 3, caractérisé en ce que la vitesse de réaction est contrôlée en faisant varier la concentration desdits composés interhalogènes.